# EUROPEAN PATENT APPLICATION

(11) **EP 3 582 162 A1**
(43) Date of publication of application: **18.12.2019**
(21) Application number: 19180036.6
(22) Date of filing: 13.06.2019
(51) Int. Cl.: G06Q 10/10, G06Q 50/18

(54) **A COMPUTERISED DOCUMENT MANAGEMENT AND CREATION SYSTEM**

(30) Priority: 15.06.2018 GB 201809889
(71) Applicant: Kennedys Law LLP, London EC3M 5AD (GB)
(72) Inventor: WEST, Richard, London, EC3M 5AD (GB); HARRIS, Jennifer, London, EC3M 5AD (GB)
(74) Representative: Ashton, Gareth Mark

(57) **Abstract**

There is provided a computerised document management and creation system for facilitating settlement of a legal claim between two parties comprising a claiming party (10c) and a defending party (12c). The system comprises a claim entry interface (42) for one of the parties to enter a new legal claim against the defending party, a liability prediction module (45) configured to compare details of the new legal claim to details and outcomes of historical legal claims (46) to predict a liability level, a settlement interface (43) configured to display the predicted liability level to the one of the parties and receive a liability offer from the one of the parties, and a document creation module (43) configured to automatically generate and send a document including the liability offer to the other one of the parties.

## Description

### FIELD OF THE INVENTION

The present invention relates to a computerised document management and creation system, in particular for facilitating the settlement of legal claims.

### BACKGROUND OF THE INVENTION

The processing of legal claims is a complex task, typically involving many different participants such as the claiming party and the counter party, various legal and administrative staff, and the Court. Legal claims often require large amounts of time to process, and computerised document management systems are commonly used to help process claims more efficiently.

A known document management system "KLAiM 3" produced by the Applicant allows the details of a claim to be entered by a defendant to a claim, and provides template letters and Court documents which are completed based on the claim details, saving significant time. However, document management systems of this kind are often rigid and prescriptive in the types of legal claims that they can handle. The better tailored to particular types of legal claim and the more specialised the document management system becomes, the less room there is for new types of legal claims to be accommodated within the system. It would therefore be desirable to provide a more flexible document management system without sacrificing the detailed assistance that the known document management system provides.

Most legal claims do not raise any new points of law, or any complex issues that have not already been decided many times before in previous claims, and so should be relatively easy to settle without requiring large amounts of legal experts' time. But, each case still often takes significant time, pushing up overall costs for both parties to a legal claim. There is therefore a desire to help improve the settlement of legal claims, by reducing the average time legal experts have to spend on each case.

Legal claims often require the party making the claim to accept some liability towards the overall value of the losses being claimed for. For example, in a car insurance claim, a claiming party may need to accept liability for 50% of the total value of the damage to their vehicle. Similar considerations may apply in personal injury claims, for example if the injured party was partly at fault.

It is therefore an object of the invention to improve upon the known art.

### SUMMARY OF THE INVENTION

According to a first aspect of the invention, there is provided a computerised document management and creation system for facilitating settlement of a legal claim between two parties comprising a claiming party and a defending party. The system comprises a claim entry interface for one of the parties to enter a new legal claim against the defending party, a liability prediction module configured to compare details of the new legal claim to details and outcomes of historical legal claims to predict a liability level, a settlement interface configured to display the predicted liability level to the one of the parties and receive a liability offer from the one of the parties, and a document creation module configured to automatically generate and send a document including the liability offer to the other one of the parties.

The system utilises the details of the legal claim to predict a liability level based on outcomes of previous similar legal claims. The predicted liability level is displayed to the one of the parties to inform the one of the parties of the likely liability that it will have to bear towards the total value of the claim. This enables the party to make a realistic offer of liability to the other party, to progress the legal claim towards being settled. Optionally, the predicted liability level may be displayed together with a confidence level indicating how confident the system is in the predicted liability level.

The system allows the one of the parties to state a liability level to be offered to the other party, and automatically generates and sends a document including the liability offer to the other party to help settle the claim, without even needing to instruct a solicitor to look at the legal claim in detail. The document may for example be sent by post, or via email, or SMS text message.

The liability offer preferably comprises a settlement value corresponding to a percentage of the total value of the claim, the percentage being the offered liability level. The system can also be used to negotiate the settlement value between the claiming and defending parties, and the settlement interface may display a plurality of percentage values of the settlement value, allowing the one of the parties to select some of those percentage values as further liability offers to provide fall-back negotiating positions if the other party does not accept the liability offer.

The settlement interface is preferably configured to receive a counter offer from the other one of the parties, and to accept the counter offer if the counter offer is within the next best further liability offer of the one of the parties. Preferably, the one of the parties sets both the liability offer and at least two further liability offers at the outset, so the system can negotiate on the party's behalf to settle the claim without needing further input from the party.

Either the claiming party or the defending party may enter the details of the claim into the system, and receive the predicted liability level. The claiming party may enter, as the claimant, the details of a new legal claim it may have against a defending party, or the defending party, as the defendant, may enter the details of a new legal claim it has received against it.

To help ease the entry of data into the system, the system may comprise a conversational interface with a Natural Language Processing module configured to ask questions of the one of the parties to provide the required information, for example based on claim detail fields.

The system may comprise a plurality of schema which define the data categories that are required for different types of legal claim, wherein the schemas are editable by a schema editor interface of the system. The schema editor interface allows definition of new schemas to allow new types of legal claim to be handled by the system. Accordingly, the schemas can define each type of legal claim in high detail, whilst the schema editor provides the system with the flexibility to adapt to new types of legal claim that may be desired in the future.

For example, a new type of legal claim may be easily created by adding an additional data field to an existing type of legal claim, in order to accommodate a change in the law or a change in working practices. The schema of a first type of legal claim may pre-define which users will be responsible for handling the legal claim, allowing correspondence to be automatically directed to those users based on the schema. A second type of legal claim may differ from the first type of legal claim only in that it pre-defines a different set of users to which correspondence will be automatically sent. Allowing different types of legal claims and associated schemas to be defined down to that fine level of granularity allows a high level of automation of the processing of the legal claims.

Each schema may further define how the data relating to legal claims of the type associated with the schema is laid out on a display screen to the claiming party, defending party, or other stakeholders. Each schema may further define data field dependencies which determine which fields of each legal claim of the type associated with the schema are shown on the display screen.

Preferably, the system comprises a dashboard interface which displays a dashboard, or in other words a homepage, to each user that logs into the system. The dashboard may comprise a tasks view in which tasks to be performed for each of the legal claims assigned to the user are displayed, and the tasks may be displayed in swim lanes, each swim lane corresponding to a respective level of urgency of the tasks in the swim lane.

Therefore, the system provides an easy overview to each user of the system of the tasks that need to be performed and which tasks are the most urgent in relation to the legal claims being dealt with. A plurality of task types may be applicable to each legal claim, and the task types comprise one or more of a checkbox to indicate that a task has been completed, a date to be entered, and creation of a document to be triggered. Each task may for example require the marking of a checkbox to indicate that a task has been completed, the entering of a date when a certain of part of the claims handling procedure has taken or will take place, or the triggering of the creation and/or sending of a document to a party involved in the legal claim.

### BRIEF DESCRIPTION OF THE DRAWINGS

Embodiments of the invention will now be described by way of non-limiting example only and with reference to the accompanying drawings, in which:
Fig. 1 shows a schematic diagram of a computerised document management and creation system according to an embodiment of the invention;
Fig. 2 shows a dashboard view generated by a dashboard interface of the computerised document management and creation system of Fig. 1;
Fig. 3 shows a tasks view generated by a dashboard interface of the computerised document management and creation system of Fig. 1;
Fig. 4 shows a contacts view generated by a claim entry interface of the computerised document management and creation system of Fig. 1;
Fig. 5 shows a claim details view generated by the claim entry interface of the computerised document management and creation system of Fig. 1;
Fig. 6 shows a tasks view generated by the claim entry interface of the computerised document management and creation system of Fig. 1;
Fig. 7 shows a settlement view generated by the settlement interface of the computerised document management and creation system of Fig. 1;
Fig. 8 shows a documents view generated by the claim entry interface of the computerised document management and creation system of Fig. 1, and
Fig. 9 is a digitally encoded electric signal of the type used to implement the system according to the embodiment of Figs. 1-8.

The figures are not to scale, and same or similar reference signs denote same or similar features.

### DETAILED DESCRIPTION

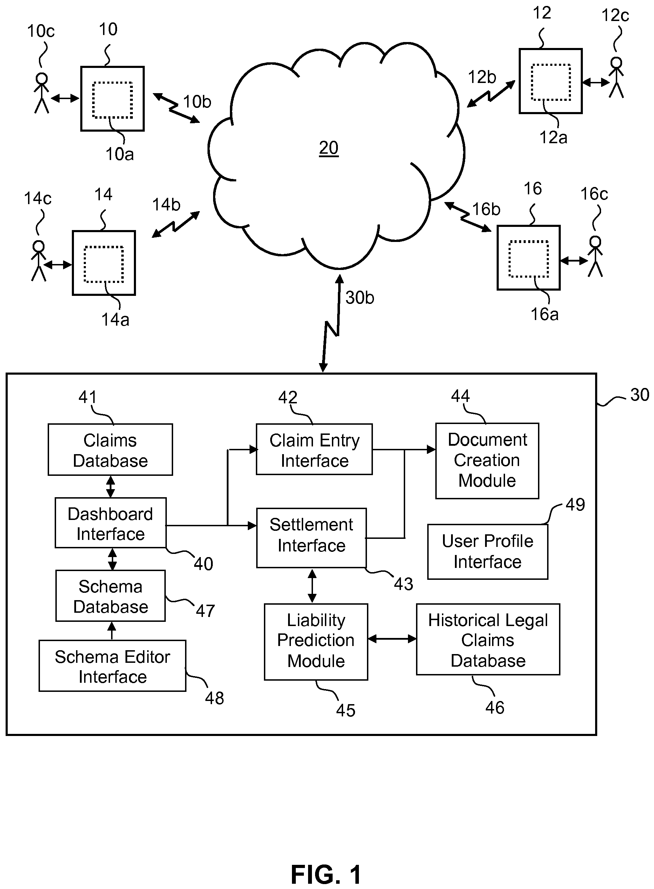

The schematic diagram of Fig. 1 shows a computerised document management and creation system according to an embodiment of the invention. The system comprises a computer server 30 which is accessible to various computer terminals 10, 12, 14, and 16 via the Internet 20. The computer server 30 is typically implemented as a "cloud" computer server, so it can be accessed from any location via the Internet, and all the relevant data is stored there rather than at the computer terminals 10, 12, 14, and 16, as will be apparent to those skilled in the art.

The computer terminals 10, 12, 14 and 16 each comprise a respective display screen 10a, 12a, 14a and 16a, and are connected to the Internet 20 via connections 10b, 12b, 14b and 14c, which may be wired or wireless connections. The computer server 30 has a connection 30b to the Internet, and so is accessible by the computer terminals 10, 12, 14 and 16.

In this embodiment, the computer terminal 10 is a computer terminal of a claiming party, the computer terminal 12 is a computer terminal of a counter party, the computer terminal 14 is a computer terminal of an administrator overseeing the system operation, and the computer terminal 16 is a computer terminal of a firm of solicitors. The claiming party is for example an insurance company acting on behalf of a client who has suffered a loss as a result of an incident for which the client was partly responsible, and the counter party is for example an insurance company acting on behalf of another person who was partly responsible and from who the claiming party is seeking compensation for the loss. The administrator maintains the computer server 30, and the firm of solicitors may receive instructions to begin Court proceedings from the computer server 30 if a claim between the claiming party and the counter party cannot be resolved via the computer server 30.

As shown in Fig. 1, the computer terminal 10 may be accessed by a claims handler 10c of the claiming party to enter a new claim and make a liability offer, the computer terminal 12 may be accessed by a claims handler 12c of the defending party to receive the liability offer and make a counter liability offer, the computer terminal 14 may be accessed by an administrator 14c to check the system is working correctly and that claims are progressing, and the computer terminal 16 may be accessed by a solicitor 16c of the firm of solicitors to receive details of the claim if the claiming party and defending party fail to settle the claim using the claim settlement interface.

As shown, the computer server 30 comprises various modules and interfaces, which are typically implemented as software program(s) running on computer processor(s), and various databases stored in memory. The computer server 30 allows users to log into the computer server for example using a username and password, and defines various classes of user which are allowed to perform different actions within the system. For example, one class of user such as team leaders may be able to access all claims being handled by a given insurance company, whereas a claims handler may only be able to access the claims of the insurance company that have been directly assigned to them. Each user registered in the system has a profile including the class of the user and definitions of the claim(s) that the user is authorised to view and/or edit.

All users can access their profile settings from a link in the header of all pages displayed to the user on their display screen 10a, 12a, 14a, or 16a. The profile settings are controlled by a profile interface 49 where the user is able to view settings and perform account maintenance such as changing their username or password. The user profile may specify which types of legal claims the user is allowed to create, for example according to what types of legal claim the user has subscribed to. The user profile may also specify what language the pages should be displayed in on the user's display screen.

The computer server 30 comprises a dashboard interface 40 for interfacing with users, a claims database 41 storing the claims that have been entered into the system, and a schema database 47 which stores schemas. The schemas allow for easy entry of different types of legal claims into the system, and new schemas can be defined by an administrator using the schema editor interface 48.

The computer server 30 also comprises a claim entry interface 42 which allows users to view and enter details of claims, and settlement interface 43 which allows users to settle claims by making liability offer(s) to the other party. The other party is the party that did not enter the details of the claim into the system, in this embodiment the defending party. In an alternate embodiment, the defending party enters the details of the claim into the system, and the settlement interface 43 allows users (such as user 12c) of the defending party to settle claims by making liability offer(s) to the claiming party.

The document creation module 44 creates documents for sending off based on the user's interactions with the claim entry and settlement interfaces 42 and 43. For example, the document creation module 44 may create a document containing a liability offer made via the settlement interface 42 by a user representing the one of the parties. The document creation module 44 automatically sends the document to the other one of the parties. The user is able to use the profile interface 49 to upload an image of their signature into their profile, for use by the document creation module 44 when documents are created.

The computer server 30 also comprises a liability prediction module 45, for providing a predicted liability level to the settlement interface 43 so that it can be displayed to the user representing the one of the parties. The liability prediction module 45 gathers the details of a legal claim from the claims database 45, and compares those details against details and outcomes of previous similar claims stored in historical legal claims database 46, to determine the predicted liability level. In this embodiment, the liability prediction module 45 also provides a confidence level indicating how confident the liability prediction module 45 is in the predicted liability level.

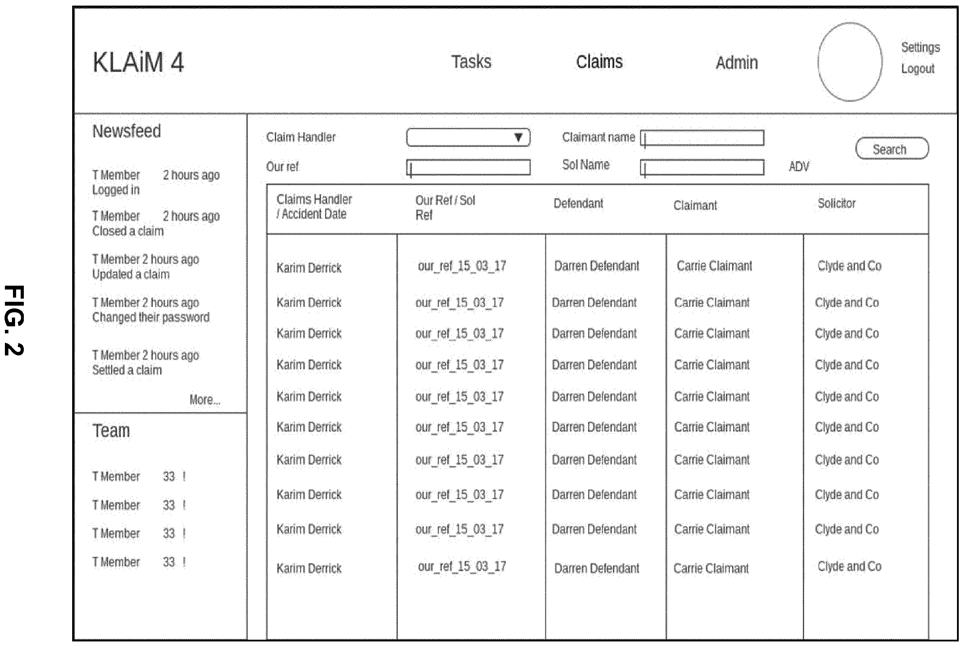

When a user logs into the system, the user is presented with a dashboard view generated by the dashboard interface 40. This is essentially a homepage, from which the user can access the claims their profile allows them to see. For example, the claims handler 10c of the insurance company corresponding to the claiming party may use their computer terminal 10 to log into the computer server 30, and the dashboard interface 40 sends the dashboard view for display on the display screen 10a of the computer terminal 10. An example dashboard view is shown in Fig. 2.

The dashboard interface 40 checks the claims database 41 for all the pending claims being handled by the claims handler 10c, and displays them in a central portion of the display, as shown in Fig. 2. The claims shown in Fig. 2 are all the same as one another, although it will be appreciated that they will be different claims to one another in practice. The basic details of the claims are shown in the dashboard view, to allow for easy identification of specific claims.

A team panel at the lower left of the display shows all team members underneath the user 10c in the company hierarchy of the claiming party. Next to each team member the number of open claims is shown. If the team member has overdue tasks then an exclamation mark is also shown. If the user 10c has no other team members under them in the hierarchy then this panel is not displayed, and a newsfeed at the upper left of the display expands to fill the space. By default, the basic details of all the claims of the user and the team members beneath them are shown in the central portion of the display, and the claims may be filtered based on various factors, for example based on User, Accident Date, Claim Reference, Defendant name, Claimant name, Solicitor name. Other possible filters for example include Claim status, Claimant street, Solicitor street.

The newsfeed gives live updates for events relevant to claims and to team members below the user 10c in the team hierarchy. An expanded version of the newsfeed may also include the ability to filter by news category, for example categories may include: Claim updates, User logged in, User added, Claim settled, Solicitors Instructed, Offer made.

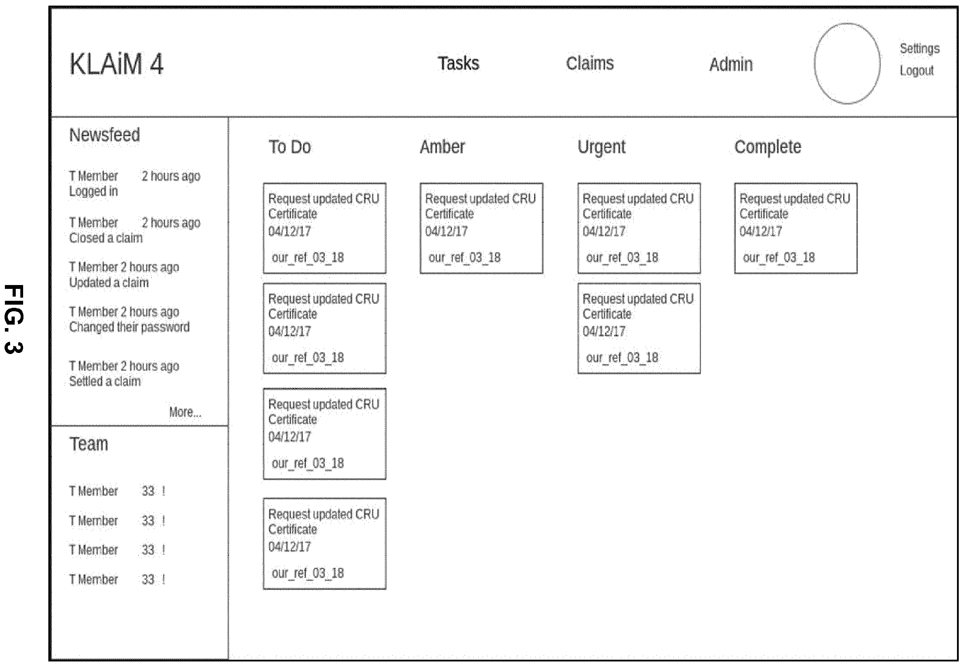

Various buttons are displayed along the top of the display for navigation to different parts of the system, including "Tasks", "Claims", and "Admin". The schematic diagram of Fig. 3 shows a tasks view generated by the dashboard interface 40 and displayed on the display 10a of the claiming parties computer terminal 10, when the user 10c clicks on the "Tasks" button shown in Fig. 2. The tasks view shows "To Do", "Amber", and "Urgent" columns corresponding to swim lanes, in which tasks appear in depending upon their urgency. A "Complete" swim lane shows recently completed tasks. The tasks in each column are ordered by their due dates.

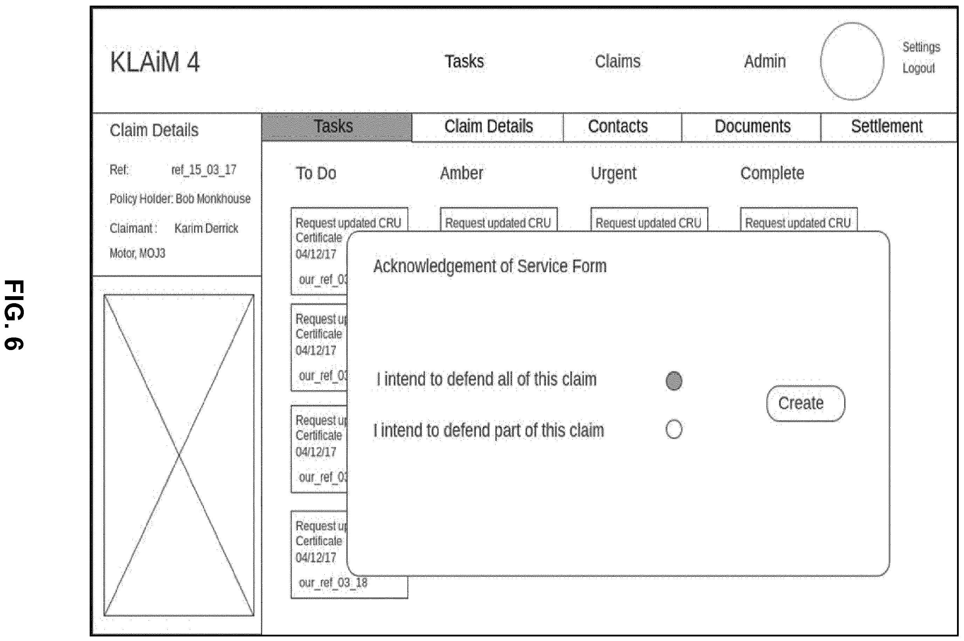

Each task is shown in the tasks view by a task ticket, which provides a brief summary of the task. The information shown in the summary is configurable, and in a default configuration includes the task due date, task title, reference, and legal track. To perform a task, the user can click on the task ticket in the tasks view, to open the task. Typical tasks include the checking of a simple checkbox to indicate that a task has been completed, for example acknowledging that a Service Form has been received and indicating how the claim will be defended, as shown in Fig. 6. Another type of task may require a date form element to be entered, for example if the task is to capture a hearing date once it has been established then the user will click the task and enter the date for the hearing. Another type of task may require the triggering of a set of documents to be created, for example an Acknowledgment of Service task when triggered would use the document creation module 44 to generate three documents. One for the Court, the Acknowledgment of Service form itself, and one for the claiming party's solicitors.

It is also possible to view the tasks for a particular claim in the tasks view, rather than all tasks, by clicking on the "Claims" button in Fig. 2 and selecting a particular claim. The details of the selected claim replace the newsfeed at the left side of the display.

The user is able to use the profile interface 49 to set their profile to indicate whether their dashboard view initially shows the claims they are handling (as seen in Fig. 2), or the tasks they need to perform (as shown in Fig. 3).

To create a new claim, for example by the claims handler 10c, the claims handler clicks on the "Claims" button in their dashboard view (Fig. 2), and specifies a type of new claim to be entered. The type of claim specified links to a particular schema in the schema database 47, and a new claim in accordance with that schema is created. The claim entry interface 42 allows the details of the claim to be entered in accordance with the schema.

The schema is a framework for describing the particular type of claim and how it is represented within the system. The schema defines the data fields, their length and their type. The schema also defines data categories and pagination which in turn determine how the data is laid out for the user. The schema defines stakeholders, their names, their addresses, their telephone numbers and so on.

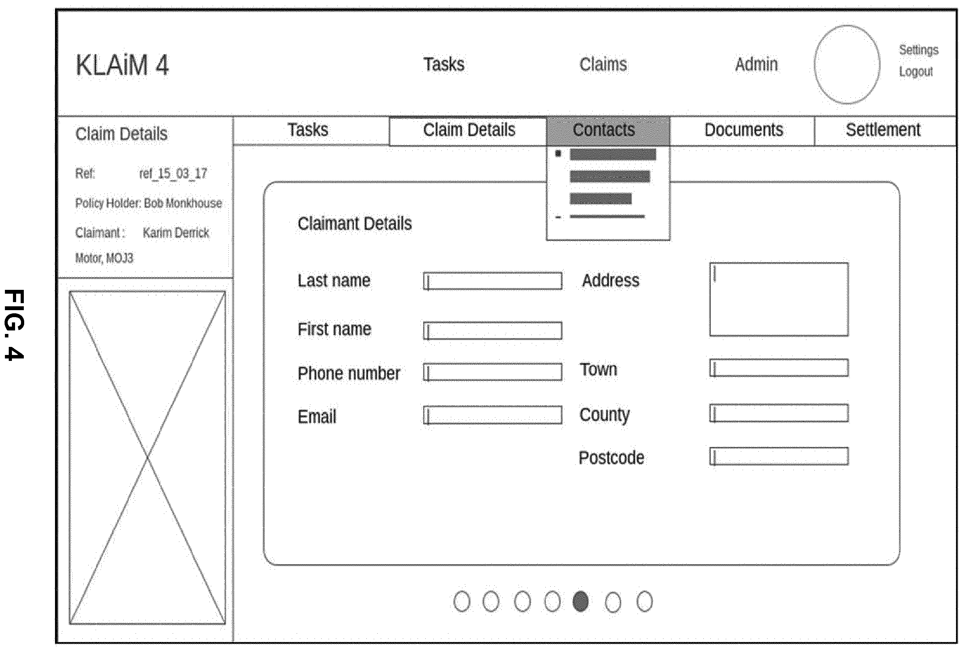

There is no limit to the data fields that could be determined for a stakeholder. The schema defines the layout and data fields required for the details of the claiming party, as shown in Fig. 4. Contacts are defined according to the schema for the claim type. Contact details can feature drop down boxes with a list of solicitors or chambers associated with the claiming party's account. The claims handler 10c uses the computer terminal 10 to populate their details as the claiming party.

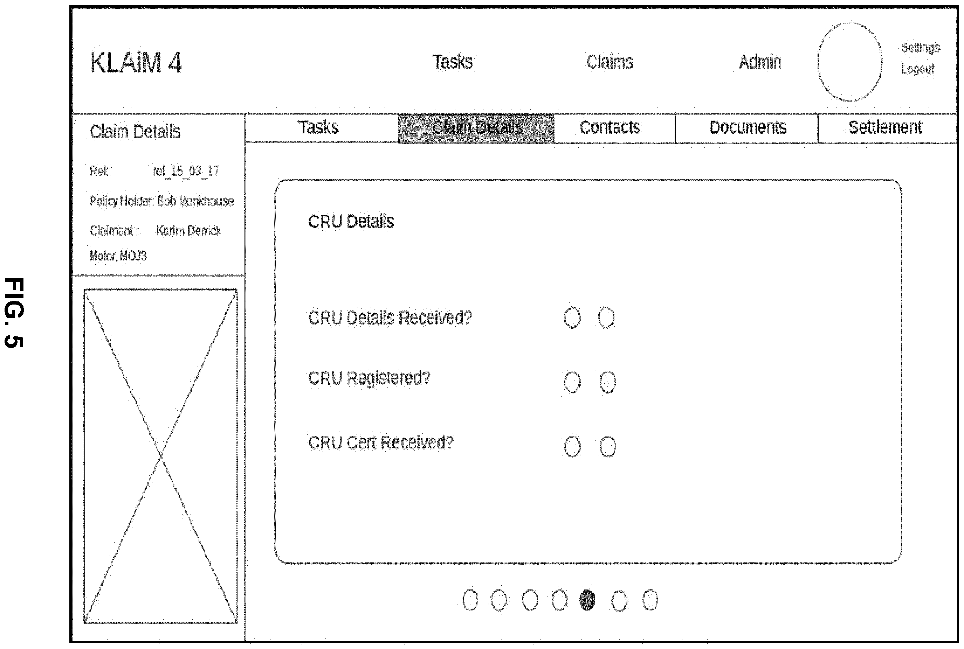

The schema also defines field dependencies which in turn determine which fields are shown on the screen. For example, referring to Fig. 5, "CRU Details Received?" is a radio button with two choices, Yes and No. If a user clicks Yes for a claim then the user will then be asked if "CRU registered?" with two choices, Yes and No. If a user clicks Yes then the user will then be asked if the "CRU Cert Received?", and so on. There is no limit to the number of nested layers that a question can have, as defined by the schema.

The system administrator has the authority to define new schemas for new types of legal claims that may be defined in the system, for example the administrator 14c can access the schema editor interface 48 to create a new schema by clicking on the "Admin" button in their dashboard view (see Fig. 2).

Each claim has a claim owner, which by default is normally the user that creates the claim, in this example the claims handler 10c. But, some classes of user may have the authority to assign claims to other users, such as one of the user's colleagues. This may be done by selecting the name of the colleague from a list, at which point the claim and all its pending tasks are assigned from the user to the user's colleague.

The claim entry interface 42 provides a conversational interface configured to automatically populate the details of the new claim by stepping through claim detail fields of the new legal claim and asking questions of the claiming party (user 10c) that provide sufficient information to complete the claim detail fields. In this embodiment, the conversational interface comprises a Natural Language Processing module that generates questions based on the claim detail fields in a humanised, conversational manner. For example, it might ask the user 10c via the computer terminal 10 "Was Primary Liability admitted on this one?", "Thanks Karim. Can you give me the court reference?", or "Which solicitors are we using for this claim?".

Once the claim details have been entered, the user 10c can move to the settlement interface 43 to help settle the claim, by clicking on the "Settlement" button (shown in Figs. 4, 5, and 6). The settlement interface supplies the details of the claim to the liability prediction module 45, and the liability prediction module 45 compares the claim details against details and outcomes of previous similar claims stored in historical legal claims database 46, to determine a predicted liability level (percentage) that the claiming party should bear towards the overall value of the claim, along with a percentage level of confidence indicating how confident the liability prediction module 45 is that the predicted liability level is correct. The liability prediction module 45 uses machine learning to create a proofs data model that predicts the liability based on vectorised models of the historical legal claims. The historical legal claims database can be periodically updated with data from claims entered in the system so the vectorised models can be kept up to date. Cases with similar semantic metrics will have similar liabilities and so the predicted liability level can be proposed with the confidence level.

The settlement interface 43 displays the predicted liability level and the confidence level to the user 10c on the display 10a, for example by displaying a message "System recommends a liability of 80% with a confidence level of 60%", and requests that the user 10c offer a liability level that the claiming party is prepared to bear towards the overall cost of the claim, as well as fall-back negotiating positions in case the liability level is not accepted by the defending party.

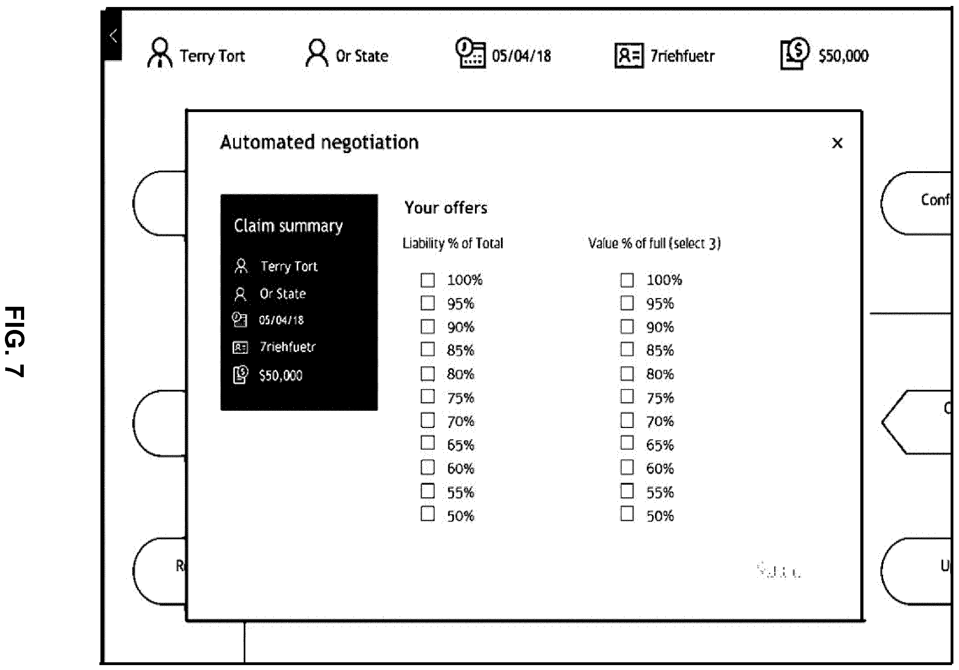

Specifically, as shown in Fig. 7, the settlement interface 43 displays a settlement view including an automated negotiation window on the display 10a, as shown in Fig. 7. The automated negotiation window includes a summary of the claim and its total value on the left, a left column of percentage values, and a right column of percentage values. The left column of percentage values invites the user to tick one of the values to offer to bear that percentage of the overall cost of the claim in a liability offer, and the right column of percentage values invites the user to tick three (or more) of those values as fall-back positions in further liability offer(s) if the first liability offer is not accepted.

For example, the claim value is $50,000, and so the user 10c may click on 80% in the left column of percentage values as recommended by the liability prediction module 45, to generate a first liability offer inviting the defendant to agree to pay $40,000 to settle the claim.

The user 10c may also click on the 90%, 85%, and 80% values in the in right column of percentage values, corresponding to lower offers that would invite the defendant to agree to pay $36,000, $34,000, or $32,000 to settle the claim in the event the first liability offer was not accepted. These lower offers are stored, and will only be sent to the defending party's claim handler 12c as second, third, or fourth liability offers if the first liability offer is not accepted.

The document creation module 44 creates and sends a document for the first liability offer corresponding to a settlement value of $40,000 to the defending party's claim handler 12c via the computer terminal 12. In this embodiment, the document is sent by email to the defending party's claim handler 12c, and the document includes a preconfigured email address for the claim handler 12c to either accept the offer or make a counter offer. Alternatively, the document could be sent by post or electronic text message (e.g. SMS).

If the offer is accepted, then the claim is settled and the process ends. But, on receipt of a counter offer from the claim handler 12c, the settlement interface 43 will automatically look to see if the counter offer falls within the boundaries of the user's first and second liability offers, for example if the counter offer is between 100% and 90% of the first liability offer (between $40,000 and $36,000). If it does, then the counter offer is accepted. Otherwise the system moves to offer the user's second liability offer of 85% ($34,000). This process continues until the system has exhausted the pre-defined list of liability offers.

The settlement interface also allows the user 10c to specify a preset proportion of the liability offer at which the settlement interface will no longer attempt to negotiate, but will instead move to instructing a solicitor. Specifically, if the counter offer is lower than the preset proportion of the original $40,000 offer, then the claim automatically falls out of the process and a solicitor 16c is instructed via the computer terminal 16. For example, if the preset proportion is set to 20%, then a counter offer beneath $32,000 will automatically cause the claim to fall out of the process.

The settlement view is also used to display settlement details for the claim once it has been settled, and may include details such as Date claim settled, Damages Agreed, Claimant costs, Fees, Disbursements, VAT, Success fees, ATE insurance premium.

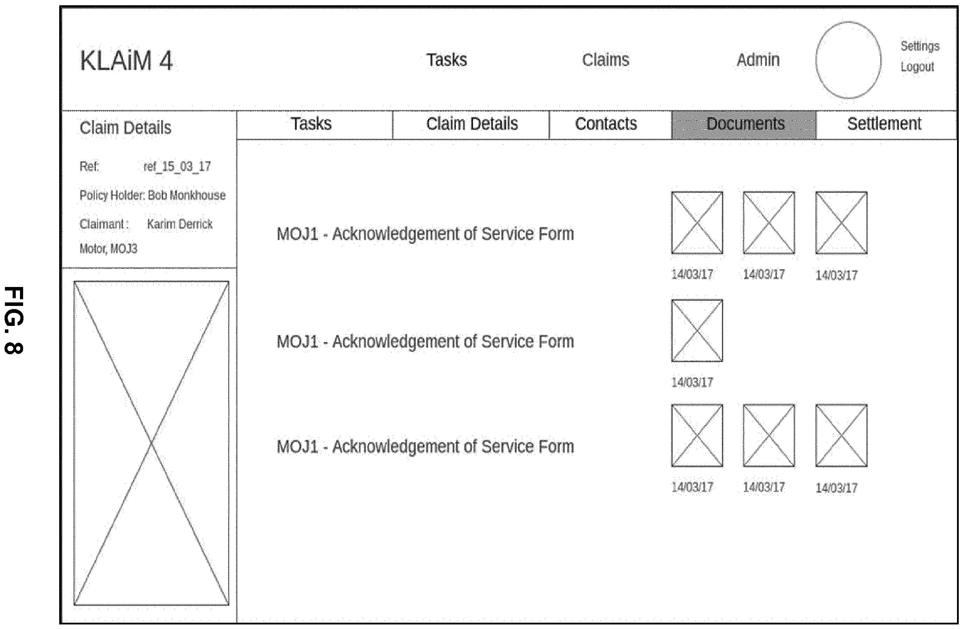

The documents that have been sent out for each claim are stored and can be viewed in a documents view, for example as shown in Fig. 8. Individual documents are shown with a date and a time and can be clicked to reveal them. The user's profile may specify that all documents created are automatically forwarded to them, for example by email. The documents view may also be used to preview documents created by the document creation module 44 before they are sent out to the other party, for example using an in-browser document viewer.

Whilst the claim described in this embodiment was entered by the user 10c of the claiming party, and used to make liability offers to the defending party, it will be appreciated that the claim could alternatively have been entered by the user 12c of the defending party, and used to make liability offers to the claiming party.

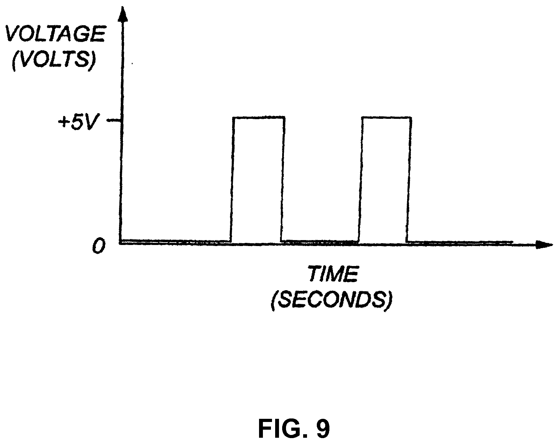

It should not be lost sight of that the purpose of the server 30 is to generate a digitally encoded electric signal (such as that illustrated in Fig. 9) which, when applied to an output interface (such as the display screen of computer terminals 10, 12, 14 and 16 or an associated printer thereof) produces an indicium or indicia which convey information and which are legible or intelligible to a human. For example, the electric signal illustrated in Fig. 9 is a binary encoded signal 001001 which when applied to the computer terminal or its associated printer causes the indicium 9 to be displayed or printed. The electrical engineering challenge solved by the present invention is to generate the necessary digitally encoded electric signals to bring about the results described in Figs. 1-8.

Many other variations of the described embodiments falling within the scope of the invention will be apparent to those skilled in the art.

## Claims

1. A computerised document management and creation system for facilitating settlement of a legal claim between two parties comprising a claiming party and a defending party, the system comprising a claim entry interface for one of the parties to enter a new legal claim against the defending party, a liability prediction module configured to compare details of the new legal claim to details and outcomes of historical legal claims to predict a liability level, a settlement interface configured to display the predicted liability level to the one of the parties and receive a liability offer from the one of the parties, and a document creation module configured to automatically generate and send a document including the liability offer to the other one of the parties.

2. The system of claim 1, wherein each legal claim is assigned to one or more registered users, and wherein the system further comprises a dashboard interface in which a registered user can view summary information of all the pending legal claims assigned to the registered user.

3. The system of claim 2, wherein the dashboard interface comprises a tasks view in which tasks to be performed for each of the legal claims assigned to the registered user are displayed, and wherein the tasks are displayed in swim lanes, each swim lane corresponding to a respective level of urgency of the tasks in the swim lane.

4. The system of any preceding claim, wherein the system comprises a conversational interface configured to automatically populate the details of the new legal claim by stepping through claim detail fields of the new legal claim and asking questions of the claiming party that provide sufficient information to complete the claim detail fields.

5. The system of any preceding claim, wherein the system is configured to handle a plurality of types of legal claim, wherein each type of legal claim comprises an associated schema defining data categories of the type of legal claim, and wherein the system further comprises a schema editor interface which is useable to define new schemas associated with new types of legal claim to be handled by the system.

6. The system of claim 5, wherein each schema further defines data field dependencies which determine which fields of each legal claim of the type associated with the schema are shown on the display screen.

7. The system of any preceding claim, wherein the settlement interface is configured to display a plurality of liability levels, and to receive the liability offer from the one of the parties by the one of the parties selecting one of the displayed liability levels.

8. The system of claim 7, wherein the liability offer comprises a settlement value corresponding to a percentage of a total claim value, the percentage being the offered liability level.

9. The system of claim 8, wherein the settlement interface is further configured to display a plurality of percentage values of the settlement value, and to receive a further liability offer from the one of the parties by the one of the parties selecting one of the percentage values.

10. The system of claim 9, wherein the settlement interface is configured to receive a counter offer from the other one of the parties, and to accept the counter offer if the counter offer is within the further liability offer, or make a still further liability offer from the one of the parties by the one of the parties selecting another one of the percentage values if the counter offer is not within the further liability offer and the settlement interface automatically generating and sending a document including the still further liability offer to the other one of the parties.

11. The system of claim 10, wherein the settlement interface is configured to not make the still further liability offer if the counter-offer is lower than a preset proportion of the liability offer, and to instead automatically generate and send a document instructing a solicitor to take over resolution of the claim.

12. The system of any preceding claim, wherein the liability prediction module is further configured to predict a confidence level associated with the predicted liability level, and the settlement interface is configured to display the predicted confidence level along with the predicted liability level.

13. The system of any preceding claim, wherein the liability prediction module is configured to compare details of the new legal claim to details and outcomes of historical legal claims to predict the liability level by comparing semantic metrics of the new claim to semantic metrics stored as vector models of the historical legal claims.

14. The system of claim 12 or 13, wherein the liability prediction module utilises machine learning to improve accuracy as historical legal claims accumulate.

15. A method of generating digitally encoded electric signals to implement the system as claimed in any one of claims 1-14.
